(19) **Europäisches Patentamt European Patent Office Office européen des brevets**

(11) **EP 4 701 102 A1**

(12) **EUROPEAN PATENT APPLICATION**

(43) Date of publication:
25.02.2026 Bulletin 2026/09

(21) Application number: 25187720.5

(22) Date of filing: 07.07.2025

(51) International Patent Classification (IPC):
*H04B 10/70* (2013.01)    *H04B 10/90* (2013.01)

(52) Cooperative Patent Classification (CPC):
H04B 10/70; H04B 10/90; H04B 2210/006

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 20.08.2024 US 202418809398

(71) Applicant: Eagle Technology, LLC
Melbourne, FL 32919 (US)

(72) Inventors:
• **KNARR, Samuel H.**
  **Melbourne, 32940 (US)**
• **BUCKLEW, Victor G.**
  **Richmond, 23235 (US)**
• **DRAKES, James A.**
  **Occoquan, 22125 (US)**
• **BRUCKMEYER, Joshua P.**
  **West Melbourne, 32904 (US)**

(74) Representative: **Schmidt, Steffen J.**
**Wuesthoff & Wuesthoff**
**Patentanwälte und Rechtsanwalt PartG mbB**
**Schweigerstrasse 2**
**81541 München (DE)**

(54) **QUANTUM RADIO FREQUENCY (RF) SIGNAL TRANSMITTER HAVING A RYDBERG CELL AND ASSOCIATED METHODS**

(57)     A quantum radio frequency (RF) signal transmitter **20** may include a Rydberg cell **22** having a container **24** and atoms **26** therein with different energy states. A plurality of lasers **36,38,40,42** may generate a plurality of respective different frequency laser beams into the Rydberg cell **22** to selectively excite different energy states and generate the RF signal **32**.

FIG. 1

EP 4 701 102 A1

**Description**

**Field of the Invention**

The present invention relates to the field of Radio Frequency (RF) transmitters, and, more particularly, to Quantum RF signal transmitters and related methods.

**Background of the Invention**

Radio frequency (RF) signals are generated, transmitted and received in communications across a wide range of commercial markets and government divisions. Emerging RF applications are pushing technical requirements to higher frequency ranges with new waveforms that may be difficult to transmit and detect. As conventional RF channels become more heavily crowded, there is a desire to use alternative RF bands spanning from tens of KHz up to 100 GHz and beyond. While some RF transmitters span multiple RF bands within this range, most are band-limited and can cover only a few tens of GHz in a single antenna transmitter, such as 1-10 GHz or 20-40 GHz. Also, some state-of-the-art RF transmitters are not compatible with new waveforms, e.g., frequency hopping between bands, rather than within bands.

Conventional RF transmitters and receivers that incorporate RF antennas may have a high technology readiness level (TRL) and are used in many modern RF transmitters and receivers. There are limitations with RF antennas, however, because they may be Size, Weight and Power (SWaP) limited. The antenna may also be on the order of the RF wavelength of radiation, and the RF coverage may be over a relatively narrow frequency band, such as 1-10 GHz or 20-40 GHz. Many conventional RF devices may employ antennas that are not compatible with emerging waveforms and may lack sensitivity, making them difficult to cover wide bandwidths with high sensitivity.

To address these limitations in RF receivers, Rydberg atom-based RF sensors have been developed, which convert the response of an atomic vapor to incoming RF radiation into measurable changes in an optical probe. These RF sensors provide a new model for RF sensing with increased sensitivity. For example, conventional antennas may provide at most about -130 to -160 dB of sensitivity, but with a Rydberg system, it can be up to about -200 dB with a broader range coverage in a single device from KHz to THz.

In a Rydberg atom-based RF sensor, the measurement is based upon the attenuation of a probe laser due to absorption in a small room temperature vapor cell filled with alkali atoms, such as rubidium (Rb) or cesium (Cs). In a two photon/laser Rydberg sensing system, atoms are simultaneously excited into a quantum "Rydberg" state with both a coupling laser and probe laser. These quantum Rydberg states are very responsive to local electric fields. The response of the atom to an external electric field, such as an RF signal, alters the measured attenuation of the probe laser, which may be detected by a probe laser photodetector. The magnitude of the electric field component of the incoming RF radiation and its center frequency detuning from atomic resonance may be determined by measuring the magnitude and asymmetry of spectral splitting of the electromagnetically induced transparency (EIT), which is called Autler Townes (AT) splitting.

Rydberg atom-based RF sensors have emerged as a viable quantum based receiver option for surpassing the sensitivity limits of traditional dipole antenna-based receivers, while also reducing the SWaP, and enabling broad frequency coverage. Most research in this area has been focused on quantum RF receivers that incorporate Rydberg cells for sensing RF signals. There has been limited research on quantum RF transmitters. Some researchers have explored six-wave mixing using a Rydberg state to generate an optical signal output, but have not generated an RF signal output.

For example, the research article to Han et al., "Coherent Microwave-to-Optical Conversion via Six-Wave Mixing in Rydberg Atoms," Physical Review Letters, 120(9), 093201 (2018), describes how a microwave field was converted into an optical field via frequency mixing in a cloud of cold rubidium atoms contained in a Rydberg vapor cell. The microwave field strongly coupled to an electric dipole transition between Rydberg states. The conversion in the Rydberg cell allowed the phase information of the microwave field to be coherently transferred to the optical field. Four different frequency lasers generated respective laser beams into the Rydberg cell to permit six-wave mixing into the Rydberg atoms and convert the microwave field into a unidirectional single frequency optical field. This research showed that Rydberg atoms may be used for transferring quantum states between optical and microwave photons. Six energy levels were employed in the six-wave mixing. However, the conversion was from microwave-to-optical. The experiment did not generate an RF signal for a quantum RF signal transmitter.

**Summary of the Invention**

A quantum radio frequency (RF) signal transmitter may comprise a Rydberg cell that may include a container and atoms therein having different energy states. A plurality of lasers may generate a plurality of respective different frequency laser beams into the Rydberg cell to selectively excite different energy states and generate the RF signal.

The plurality of lasers may comprise a probe laser configured to excite the atoms to a first energy state. The plurality of lasers may comprise a coupling laser configured to excite the atoms from the first energy state to a first Rydberg energy state. The plurality of lasers may also comprise a signal laser configured to excite the atoms from the first energy state to a second energy state. The plurality of lasers may comprise a dressing laser configured to excite the atoms from the second energy state to a second Rydberg energy state.

The controller may be configured to selectively operate the plurality of lasers. The controller may be configured to selectively operate the respective frequencies and powers of the plurality of lasers to control a center frequency of the RF signal. A plurality of RF elements may be adjacent the Rydberg cell to define an RF amplification cavity.

Another aspect is directed to a method for quantum radio frequency (RF) signal transmission that may comprise operating a plurality of lasers generating a plurality of respective different frequency laser beams into a Rydberg cell to selectively excite different energy states for atoms within the Rydberg cell and generate the RF signal.

## Brief Description of the Drawings

Other objects, features and advantages of the present invention will become apparent from the detailed description of the invention which follows, when considered in light of the accompanying drawings in which:

FIG. 1 is a schematic diagram of the quantum radio frequency (RF) signal transmitter according to the invention.
FIG. 2 is a state diagram showing the different energy states in the quantum RF signal transmitter of FIG. 1.
FIG. 3 is a graph showing transition frequencies versus the principal quantum numbers demonstrating that broadly tunable RF emissions are feasible in the quantum RF signal transmitter of FIG. 1.
FIG. 4 is a graph showing a non-zero density matrix element between states r2 and r1 in the state diagram of FIG. 2 indicating RF emissions as shown in the top peak of the graph.
FIG. 5 is a graph showing the results of probe detuning as a function of the input laser powers.
FIG. 6 is a graph showing the RF spatial mode size relative to the size of the RF cavity for the quantum RF signal transmitter of FIG. 1.
FIG. 7 is a diagram showing how the RF signal output power from the quantum RF signal transmitter of FIG. 1 is dependent on the probe and coupling laser beam frequencies.
FIG. 8 is a graph showing that the transmitted power from the quantum RF signal transmitter of FIG. 1 varies by distance.
FIG. 9 is a high-level flowchart showing the method for quantum RF signal transmission using the quantum RF signal transmitter of FIG. 1.
FIG. 10 is a schematic diagram of a quantum RF signal transmitter using a plurality of Rydberg cells and a combiner that combines respective RF signals.
FIG. 11 is another schematic diagram of the quantum RF signal transmitter showing the combiner as respective phase shifters.
FIG. 12 is a high-level flowchart of a method for generating an output RF signal using the quantum RF signal transmitters of FIGS. 10 and 11.

## Detailed Description

The present description is made with reference to the accompanying drawings, in which exemplary embodiments are shown. However, many different embodiments may be used, and thus, the description should not be construed as limited to the particular embodiments set forth herein. Rather, these embodiments are provided so that this disclosure will be thorough and complete. Like numbers refer to like elements throughout, and prime notation is used to indicate similar elements in different embodiments.

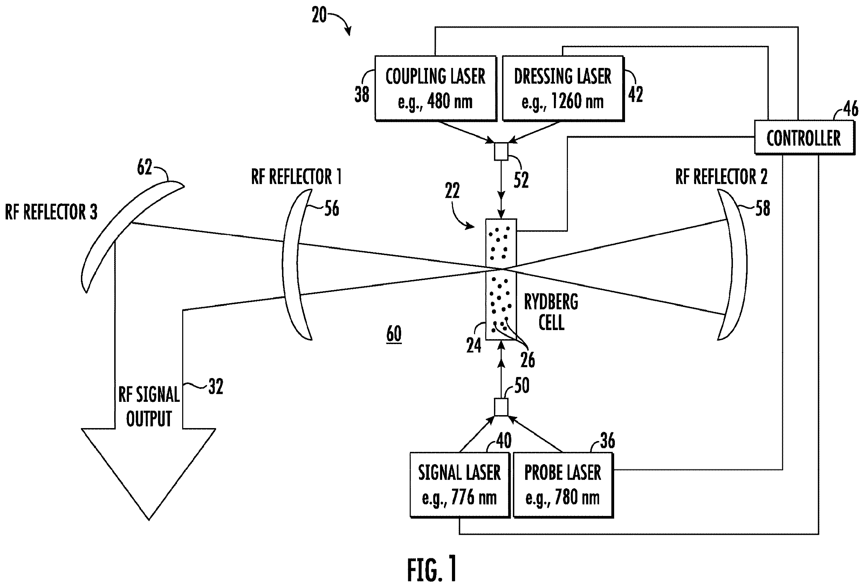

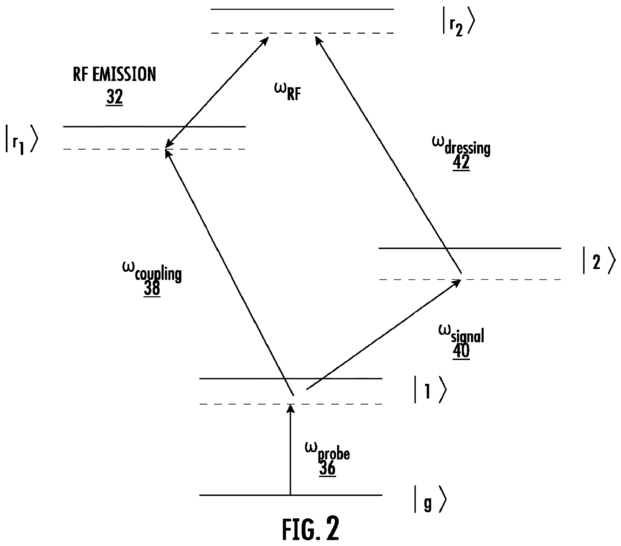

Referring now to FIG. 1, there is illustrated generally at **20** a quantum radio frequency (QRF) signal transmitter that includes a Rydberg cell **22** formed as a container **24** and atoms **26** therein having different energy states. A plurality of lasers as a probe laser **36**, coupling laser **38**, signal laser **40**, and dressing laser **42** may generate a plurality of respective different frequency laser beams into the Rydberg cell **22** to selectively excite different energy states and generate the RF emission as an RF signal **32** as shown in the state diagram of FIG. 2. Different energy levels as grounding (g), first (1), and second (2) energy levels, and Rydberg energy states as first Rydberg (r1) and second Rydberg (r2) energy states are shown, which together generate the RF emission as an RF signal **32.**

The plurality of lasers includes the probe laser **36** configured to excite the atoms **26** from the ground state (g) to a first energy state (1) and the coupling laser **38** configured to excite the atoms **26** from the first energy state (1) to a first Rydberg energy state (r1) as shown in the state diagram of FIG. 2. The signal laser **40** is configured to excite the atoms **26** from the first energy state (1) to a second energy state (2). The dressing laser **42** is configured to excite the atoms **26** from the second energy state (2) to a second Rydberg energy state (r2).

As non-limiting examples, the probe laser **36** may be about 780 nanometers, and the signal laser **40** may be about 776 nanometers. The dressing laser **42** may be about 1,260 nanometers and the coupling laser **38** may be about 480 nanometers. A controller **46** is connected to the probe laser **36,** coupling laser **38,** signal laser **40,** and dressing laser **42,** and configured to selectively operate the plurality of lasers. The controller **46** is also connected to the Rydberg cell **22.** To obtain the six-wave mixing, the signal laser **40** and probe laser **36** generate their laser beams into a first optical mixer **50** that passes the mixed laser beams into the Rydberg cell **22.** The coupling laser **38** and dressing laser **42** generate and transmit their respective laser beams into a second optical mixer **52** that passes the mixed laser beams into the Rydberg cell **22.** The four lasers of different frequency, i.e., the coupling laser **38,** dressing laser **42,** signal laser **40,** and probe laser **36** demonstrate coherent six-wave mixing in the Rydberg atoms **26** to generate the RF signal **32.** Although six-wave mixing is described, the quantum RF signal transmitter **20** is not limited to six-wave mixing, but any type of coherent mixing involving Rydberg states may be used.

The controller **46** may selectively operate the respective frequencies and powers of the plurality of lasers **36,38,40,42** to control a center frequency of the RF signal **32** as explained in greater detail below. In order to amplify the RF signal **32** emitted from the Rydberg cell **22,** a plurality of RF elements formed in this example as first and second RF reflectors **56,58** are adjacent the Rydberg cell **22** to define an RF amplification cavity shown generally at **60.** A third RF reflector **62** receives the reflected RF signal and provides the RF output as the RF signal **32** shown in FIG. 1.

The Rydberg cell **22** may be formed from different materials for the container **24** and Rydberg atoms **26** therein. In an example, the Rydberg cell **22** may be a rubidium Rydberg cell, such as Thor Labs Part No. GC19075-RB. Other atoms **26** as the Rydberg cell **22** vapors may be specific atomic elements and include Cesium (Cs), potassium (K), sodium (Na), and possibly iodine (I).

The RF emission producing the output RF signal **32** occurs between the Rydberg energy levels r2 and r1 of the Rydberg cell **22** (FIG. 2). The lasers **36,38,40,42** drive the coherent six-wave mixing between the different energy states. By varying the frequencies and powers of the lasers driving this coherent process, the center frequency of the RF signal **32** can be varied, and the RF signal power may be maximized. Due to the highly excited nature of the Rydberg states, and the large number of states with transition frequencies ranging from the kilohertz to the gigahertz, small changes to the optical carrier frequency translate the broad ranges of addressable RF frequencies. In this example, in a single Rydberg cell **22,** broad kilohertz to gigahertz emission frequencies for the RF signal **32** may be realized in a small form factor. Because there are no size limitations to this quantum RF signal transmitter **20,** as compared with many conventional electronic RF signal transmitters, the size may be kept constant, e.g., in a one-half rack unit (RU) box, across the entire kilohertz to gigahertz tuning range. Because the coherent processes with the four lasers **36,38,40,42** may be weak, the use of the RF amplification cavity **60** based amplification, as illustrated with the quantum RF signal transmitter **20** in FIG. 1, boosts the emission power of the RF signal **32.**

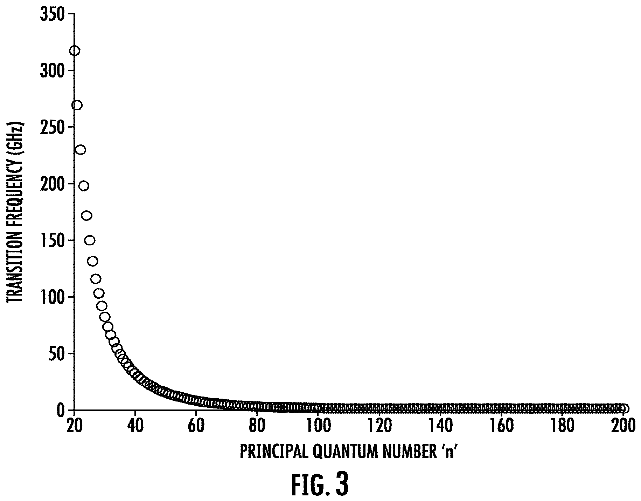

Referring to the graph in FIG. 3, there is illustrated a range of transition frequencies in gigahertz along the vertical axis and a principal quantum number "N" along the horizontal axis. This graph illustrates that the accessible RF frequencies with lifetimes and electrical dipole transitions support radiative transitions from the quantum RF signal transmitter **20.** The dense manifolds of dipole allowed transitions exist, indicating that tunable RF emissions for the RF signal **32** are feasible.

Equations of quantum motion shown below for the state diagram of FIG. 2 describe the atomic dynamics and transition between the common states under the influence of driving optical and RF fields. The steady state populations and coherences are solved. For example, the equations of quantum motion for the diagonal elements are shown, and for the off-diagonal elements are shown.

**Diagonal Elements**

$$\dot{\rho}_{gg} = \frac{i\Omega_p}{2}\left(\rho_{1g} - \rho_{g1}\right) + \rho_{11}\left(\Gamma_{1g} + \gamma_t\right) + \rho_{22}\left(\Gamma_{2g} + \gamma_t\right) + \rho_{r1r1}\left(\Gamma_{r1g} + \gamma_t\right) + \rho_{r2r2}\left(\Gamma_{r2g} + \gamma_t\right)$$

$$\dot{\rho}_{11} = \frac{-i\Omega_p}{2}\left(\rho_{1g} - \rho_{g1}\right) + \frac{-i\Omega_s}{2}\left(\rho_{12} - \rho_{21}\right) + \frac{-i\Omega_c}{2}\left(\rho_{1r1} - \rho_{r11}\right) - \rho_{11}\left(\Gamma_{1g} + \gamma_t\right) + \rho_{22}\Gamma_{21} + \rho_{r1r1}\Gamma_{r11} + \rho_{r2r2}\Gamma_{r21}$$

$$\dot{\rho}_{22} = \frac{i\Omega_s}{2}\left(\rho_{12} - \rho_{21}\right) + \frac{-i\Omega_d}{2}\left(\rho_{2r2} - \rho_{r22}\right) - \rho_{22}\left(\Gamma_{2g} + \Gamma_{21} + \gamma_t\right) + \rho_{r1r1}\Gamma_{r12} + \rho_{r2r2}\Gamma_{r22}$$

$$\dot{\rho}_{r1r1} = \frac{i\Omega_c}{2}\left(\rho_{1r1} - \rho_{r11}\right) + \frac{i\Omega_{RF}}{2}\left(\rho_{r2r1} - \rho_{r1r2}\right) - \rho_{r1r1}\left(\Gamma_{r1g} + \Gamma_{r11} + \Gamma_{r12} + \gamma_t\right) + \rho_{r2r2}\Gamma_{r2r1}$$

$$\dot{\rho}_{r2r2} = -\frac{i\Omega_{RF}}{2}(\rho_{r2r1} - \rho_{r1r2}) + \frac{i\Omega_d}{2}(\rho_{2r2} - \rho_{r22}) - \rho_{r2r2}\left(\Gamma_{r2g} + \Gamma_{r21} + \Gamma_{r22} + \Gamma_{r2r1} + \gamma_t\right)$$

**Off-Diagonal Elements**

$$\dot{\rho}_{1g} = \frac{-i\Omega_p}{2}\left(\rho_{11} - \rho_{gg}\right) + \frac{i\Omega_c}{2}\rho_{r1g} + \frac{i\Omega_s}{2}\rho_{2g} - \rho_{1g}\left(\gamma_{1g} + \gamma_t + i\Delta_p\right)$$

$$\dot{\rho}_{2g} = -\frac{i\Omega_p}{2}\rho_{21} + \frac{i\Omega_s}{2}\rho_{1g} + \frac{i\Omega_d}{2}\rho_{r2g} - \rho_{2g}\left(\gamma_{2g} + \gamma_t + i\Delta_2\right)$$

$$\dot{\rho}_{r1g} = \frac{i\Omega_c}{2}\rho_{1g} - \frac{i\Omega_p}{2}\rho_{r11} + \frac{i\Omega_{RF}}{2}\rho_{r2g} - \rho_{r1g}\left(\gamma_{r1g} + \gamma_t + i\Delta_{r1}\right)$$

$$\dot{\rho}_{r2g} = \frac{i\Omega_d}{2}\rho_{2g} - \frac{i\Omega_p}{2}\rho_{r21} + \frac{i\Omega_{RF}}{2}\rho_{r1g} - \rho_{r2g}\left(\gamma_{r2g} + \gamma_t + i\Delta_{r2}\right)$$

$$\dot{\rho}_{21} = \frac{-i\Omega_s}{2}\left(\rho_{11} - \rho_{22}\right) + \frac{-i\Omega_c}{2}\rho_{2r1} + \frac{-i\Omega_p}{2}\rho_{2g} + \frac{i\Omega_d}{2}\rho_{r21} - \rho_{21}\left(\gamma_{21} + \gamma_t + i\left(\Delta_2 - \Delta_p\right)\right)$$

$$\dot{\rho}_{r11} = \frac{-i\Omega_c}{2}\left(\rho_{r1r1} - \rho_{11}\right) + \frac{i\Omega_{RF}}{2}\rho_{r21} + \frac{-i\Omega_p}{2}\rho_{r1g} + \frac{-i\Omega_s}{2}\rho_{r12} - \rho_{r11}\left(\gamma_{r11} + \gamma_t + i\left(\Delta_{r1} - \Delta_p\right)\right)$$

$$\dot{\rho}_{r12} = \frac{i\Omega_c}{2}\rho_{12} + \frac{i\Omega_{RF}}{2}\rho_{r22} + \frac{-i\Omega_d}{2}\rho_{r1r2} + \frac{-i\Omega_s}{2}\rho_{r11} - \rho_{r12}\left(\gamma_{r12} + \gamma_t + i\left(\Delta_{r1} - \Delta_2\right)\right)$$

$$\dot{\rho}_{r21} = \frac{-i\Omega_c}{2}\rho_{r2r1} + \frac{i\Omega_d}{2}\rho_{21} + \frac{-i\Omega_p}{2}\rho_{r2g} + \frac{i\Omega_{RF}}{2}\rho_{r11} + \frac{-i\Omega_s}{s}\rho_{r22} - \rho_{r21}\left(\gamma_{r21} + \gamma_t + i\left(\Delta_{r2} - \Delta_p\right)\right)$$

$$\dot{\rho}_{r22} = \frac{i\Omega_d}{2}\left(\rho_{22} - \rho_{r2r2}\right) + \frac{i\Omega_{RF}}{2}\rho_{r12} + \frac{-i\Omega_s}{s}\rho_{r21} - \rho_{r22}\left(\gamma_{r22} + \gamma_t + i\left(\Delta_{r2} - \Delta_2\right)\right)$$

$$\dot{\rho}_{r2r1} = \frac{i\Omega_{RF}}{2}\left(\rho_{r1r1} - \rho_{r2r2}\right) + \frac{-i\Omega_c}{2}\rho_{r21} + \frac{i\Omega_d}{2}\rho_{2r1} - \rho_{r2r1}\left(\gamma_{r2r1} + \gamma_t + i\left(\Delta_{r2} - \Delta_{r1}\right)\right)$$

A model determined from these equations of quantum motion agree with results published in the Han et al. article, showing that the conversion from the RF signal to the optical domain is possible using coherent six-wave mixing with four lasers. It is possible to reverse and use the coherent six-wave mixing process with the four lasers 36,38,40,42 to generate an RF signal from the optical domain in the quantum RF signal transmitter **20**.

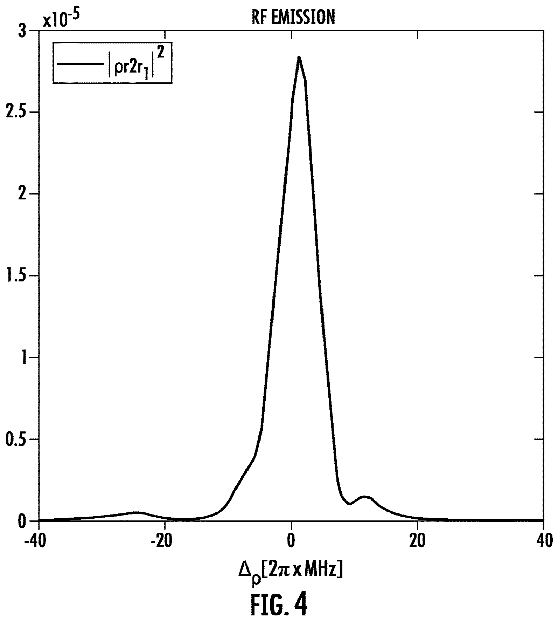

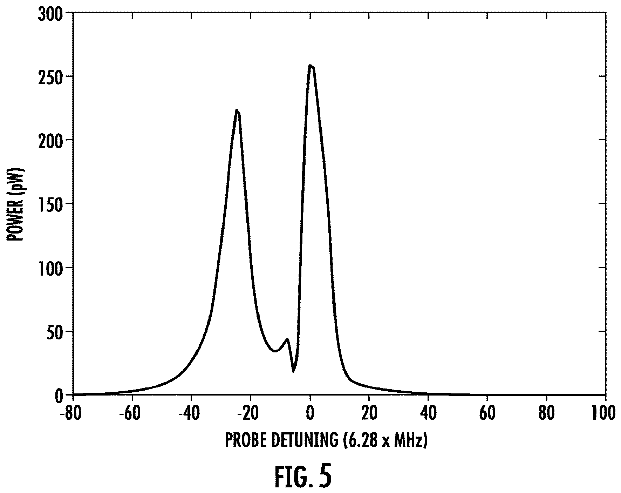

Referring now to FIGS. 4 and 5, there are illustrated graphs for the RF emission as the RF signal **32** from the Rydberg cell **22** based upon the six-wave mixing of the four lasers **36,38,40,42** as shown in the state diagram of FIG. 2. In the graph of FIG. 4, the non-zero density matrix element between Rydberg energy states r2 and r1 (FIG. 2) indicates there is an RF emission **32**. The RF signal **32** power varies as a function of the input laser powers from the probe, coupling, signal, and dressing lasers **36,38,40,42** and detunings from resonance as shown in the graph of FIG. 5, which is supported by the mathematical proof outline shown below.

The Rabi frequencies also obey the Maxwell-Bloch equation:

$$\left(\frac{1}{c}\partial_t + \partial_z\right)\Omega_j(t,z) = \frac{iN_{at}(z)|d_{ij}|^2\rho_{ji}(z,t)\omega_j}{\hbar\epsilon_0 c}$$

$N_{at}(z)$ is the atomic number density in the Rydberg cell.

For a steady state approximation, $\partial_t\Omega \approx 0$, so,

$$\partial_z\Omega_j^{(ss)}(z) = \frac{iN_{at}(z)|d_{ij}|^2\rho_{ji}^{(ss)}(z)\omega_j}{\hbar\epsilon_0 c}$$

For a zeroth order approximation, assume the atomic distribution is isotropic $N_{at}(z) = N_{at}$ and that $\rho_{ji}^{(ss)} \approx$ constant.

Then using the initial condition $\Omega_j^{(ss)}(0) = 0$,

$$\Omega_j^{(ss)}(z) = \frac{iN_{at}|d_{ij}|^2\rho_{ji}^{(ss)}\omega_j}{\hbar\epsilon_0 c}L$$

or

$$\left|E_j^{(ss)}\right| \approx \left|\frac{N_{at}d_{ij}\rho_{ji}^{(ss)}\omega_j L}{\epsilon_0 c}\right|$$

The RF signal **32** is numerically demonstrated from the Rydberg cell **22** based upon the mathematical proof outline and shown in the graph of FIG. 5. Power levels are in the picowatt (pW), but can be further optimized potentially by orders of magnitude and optimizing the laser **36,38,40,42** parameters, using the RF amplification cavity **60** shown in the quantum RF signal transmitter **20** of FIG. 1.

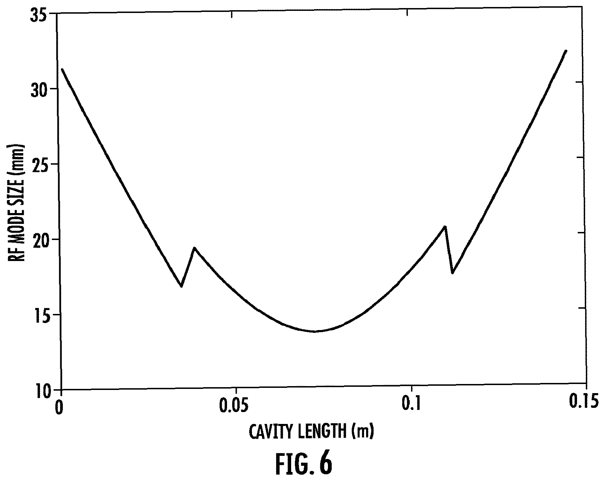

Referring now to FIG. 6, the graph illustrates how the RF spatial mode sized within the RF amplification cavity **60** shown in the quantum RF signal transmitter **20** of FIG. 1 varies with the cavity length in meters. Thus, the RF amplification cavity **60** may potentially enhance the RF signal **32** with stimulated emission or other coherent processes.

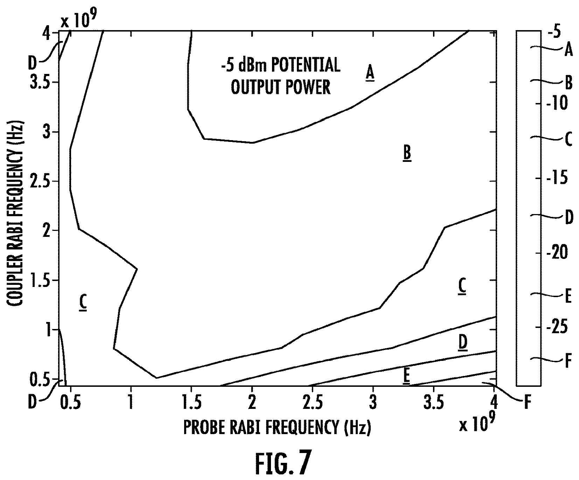

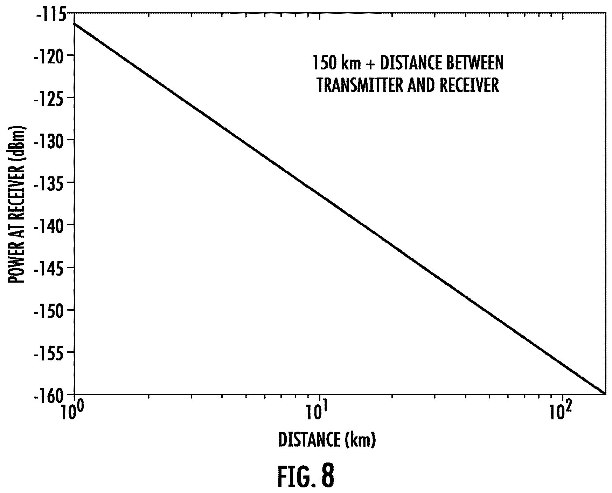

By using optimized laser beam parameters and maximizing the optical laser beam sizes within the Rydberg cell **22,** and matching the RF mode size to modes supported by the RF amplification cavity **60,** a higher RF signal **32** power output of about -5 dBm and longer transmission distances such as 150 kilometers may be achieved. Applications may include connecting airborne to ground assets with a wide range of communication bands. For example, the RF signal output power diagram in FIG. 7 shows a 10 millimeter optical and RF mode size within a rubidium Rydberg cell **22** with -5 dBm potential output power. This allows longer transmission distances such as illustrated in the graph of FIG. 8, showing 150 kilometer plus distances between the quantum RF signal transmitter **20** and a receiver, where power at the receiver end decreases as the distance in kilometers increases.

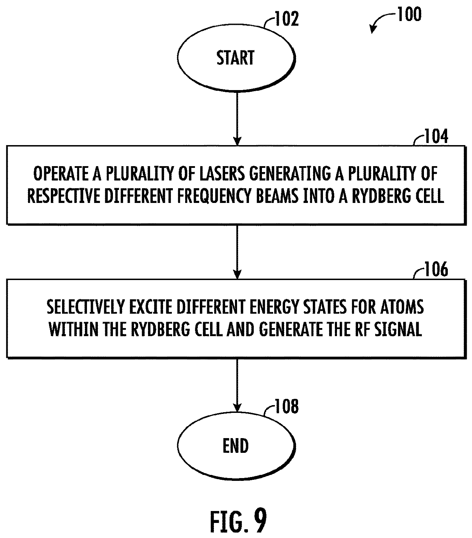

Referring now to FIG. 9, there is illustrated generally at **100** a high-level flowchart showing a method for quantum RF signal **32** transmission. The process starts (Block **102**) by operating a plurality of lasers **36,38,40,42** and generating a plurality of respective different frequency laser beams into a Rydberg cell **22** (Block **104**). The method includes selectively exciting different energy states for atoms **26** within the Rydberg cell **22** and generating the RF signal **32** (Block **106**). The process ends (Block **108**).

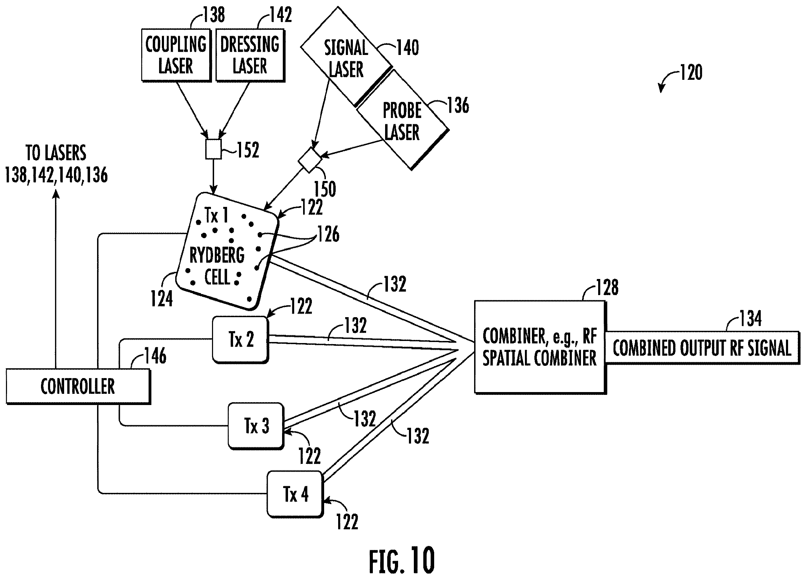

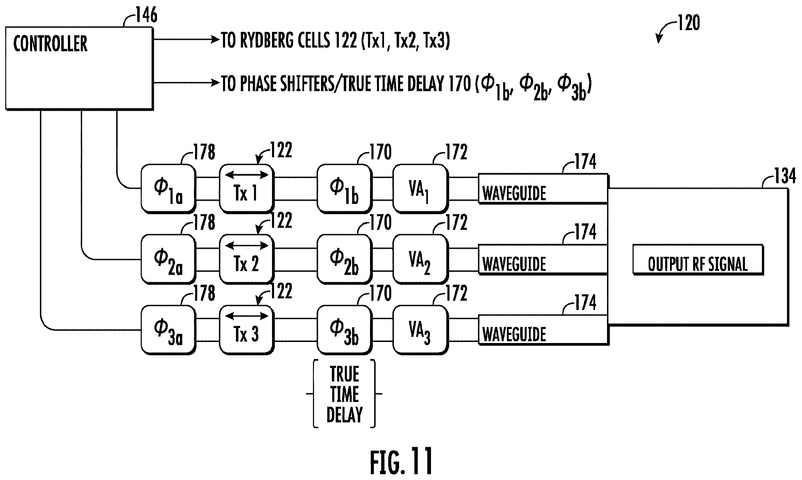

Referring now to FIGS. 10 and 11, another example of the quantum radio frequency (RF) signal transmitter **120** is illustrated having a plurality of Rydberg cells **122,** each configured to generate a respective RF signal **132**. A combiner 128 downstream from the plurality of Rydberg cells **122** is configured to combine the respective RF signals **132** into an output RF signal **134**. Each Rydberg cell **122** in this example is labeled with a "Tx" such as "Tx1" or "Tx2", indicating that each Rydberg cell includes its respective plurality of lasers that may generate a plurality of respective different frequency laser beams into the Rydberg cell to selectively excite different energy levels and Rydberg energy states to generate a RF signal 132. Each Rydberg cell **122** may include a respective RF cavity adjacent thereto.

In FIG. 10, four parallel Rydberg cells **122** each operate as an individual RF signal transmitter and transmit their respective RF signals **132** into the combiner **128** for a combined output RF signal **134**. The description of the quantum RF signal transmitter **20** of FIG. 1 applies to each respective Rydberg cell **122**. As noted before, each of the Rydberg cells **122** includes a container **124** and atoms **126** therein having different energy states as shown in the state diagram of FIG. 2. A plurality of lasers **136,138,140,142** generate a plurality of respective different frequency laser beams into the Rydberg cell **122** to selectively excite different energy states and generate the RF signal **132**. In the example of FIG. 10, only one Rydberg cell **122** as Tx1 is shown having its four lasers **136,138,140,142**. However, each of the other Rydberg cells **122** shown as Tx2, Tx3, Tx4 would have the lasers **136,138,140,142** incorporated therewith.

Although not illustrated in detail in FIGS. 10 and 11, each of those Rydberg cells **122** is operative with a probe laser **136** that is configured to excite the atoms **126** to a first energy state, a coupling laser **138** configured to excite the atoms from the first energy state to a first Rydberg state, a signal laser **140** configured to excite the atoms from the first energy state to a second energy state, and a dressing laser **142** configured to excite the atoms from the second energy state to a second Rydberg energy state. As with the quantum RF signal transmitter **20** of FIG. 1, first and second optical mixers **150,152** are used to obtain the six-wave mixing for each Rydberg cell **122**. The controller **146** may be configured to selectively operate the plurality of lasers **136,138,140,142**.

In the example of FIG. 10, the combiner **128** may be formed as an RF spatial combiner such as described in U.S. Patent No. 10,340,574, the disclosure which is hereby incorporated by reference in its entirety. The combiner **128** may include an open waveguide structure or an output coaxial waveguide section having an output port.

In the example of FIG. 11, the combiner **128** includes a respective phase shifter **170** downstream from each Rydberg cell **122** that may be formed as a true time delay unit. The combiner **128** may also include a respective attenuator **172** downstream from each Rydberg cell **122**. The incorporation of a phase shifter **170** as a true time delay unit alleviates laser beam distortion or "squinting" over a larger frequency range, permitting a wider bandwidth array for transmission of the RF signal **132**. A true time delay unit **170** provides many wavelengths of phase shifting, and the phase shift is proportional to the frequency. This allows a group delay difference between two states to create a flatter phase over the entire frequency bandwidth, and thus, allow squint reduction in the RF signal **132**. It is possible to use true time delay MMICs, for example.

It is also possible to use coax, optical, micro strip, and strip-line devices configured for true time delay. Multibit time delay units may include switches, time delay elements and equalizers to form a reference path and time delay path such as using different lengths of transmission lines. Each Rydberg cell **122** may generate the RF signal **132** into a waveguide **174** after the phase shift **170** and attenuator **172** to be combined into an output RF signal **134**. It is also possible to apply a phase delay using a phase delay device **178** into one of the lasers, such as the coupling laser **138**, dressing laser **142**, signal laser **140**, and probe laser **136** (not shown in FIG. 11).

In the embodiment of FIG. 11, the "N" independent low power Rydberg cells **122** as individual quantum RF signal transmitters are combined using phase control mechanisms that may include free space delays or other spectral beam combining techniques that can provide N-fold enhancement power. It is possible to use a diffraction grating using the Rydberg cells **122** as separate quantum RF signal transmitters as in FIG. 10 with slightly different center frequencies. It is also possible to use phased arrays with each having a controllable phase control element, such as a free space delay, or impart a different modulation of the lasers **136,138,140,142** driving the emission of each Rydberg cells **122**.

There may also be an electrical phase delay which can allow for constructive and destructive interference as a shared output RF signal **134** of the quantum RF signal transmitter **120** to combine different signals **132** from different Rydberg cells **122** as transmitters. A wideband transmitter spectrum may be achieved, but limiting the spectrum to an octave may be preferred in some operational scenarios.

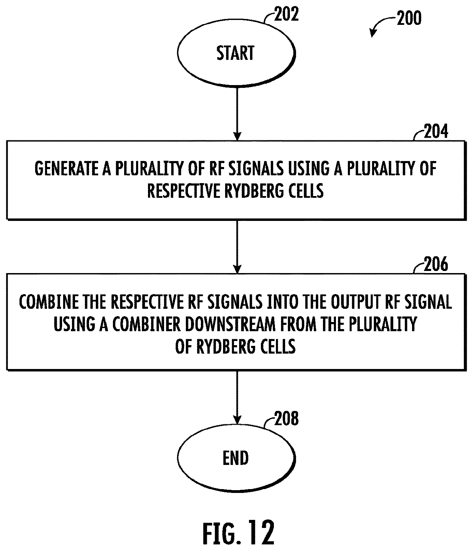

Referring now to FIG. 12, there is illustrated generally at **200** a high-level flowchart showing a method for generating an output radio frequency (RF) signal **134**. The process starts (Block **202**) and the method includes generating a plurality of RF signals **132** using a plurality of respective Rydberg cells **122** (Block **204**). The method further includes combining the respective RF signals **132** into the output RF signal **134** using a combiner **128** downstream from the plurality of Rydberg cells **122** (Block **206**). The process ends (Block **208**).

This application is related to copending patent applications entitled, **"QUANTUM RADIO FREQUENCY (RF) SIGNAL TRANSMITTER HAVING A PLURALITY OF RYDBERG CELLS AND RF SIGNAL COMBINER AND ASSOCIATED METHODS,"** which is filed on the same date and by the same assignee and inventors, the disclosure which is hereby incorporated by reference.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

**Claims**

1. A quantum radio frequency (RF) signal transmitter comprising:

a Rydberg cell comprising a container and atoms therein having different energy states; and
a plurality of lasers generating a plurality of respective different frequency laser beams into the Rydberg cell to selectively excite different energy states and generate the RF signal.

2. The quantum RF signal transmitter of claim 1, wherein the plurality of lasers comprises a probe laser configured to excite the atoms to a first energy state.

3. The quantum RF signal transmitter of claim 2, wherein the plurality of lasers comprises a coupling laser configured to excite the atoms from the first energy state to a first Rydberg energy state.

4. The quantum RF signal transmitter of claim 3, wherein the plurality of lasers comprises a signal laser configured to excite the atoms from the first energy state to a second energy state.

5. The quantum RF signal transmitter of claim 4, wherein the plurality of lasers comprises a dressing laser configured to excite the atoms from the second energy state to a second Rydberg energy state.

6. The quantum RF signal transmitter of claim 1, comprising a plurality of RF elements adjacent the Rydberg cell to define an RF amplification cavity.

7. A method for quantum radio frequency (RF) signal transmission comprising:
operating a plurality of lasers generating a plurality of respective different frequency laser beams into a Rydberg cell to selectively excite different energy states for atoms within the Rydberg cell and generate the RF signal.

8. The method of claim 7, wherein the plurality of lasers comprises a probe laser to excite the atoms to a first energy state.

9. The method of claim 8, wherein the plurality of lasers comprises a coupling laser to excite the atoms from the first energy state to a first Rydberg energy state.

10. The method of claim 7, comprising amplifying the RF signal with a plurality of RF elements defining an RF amplification cavity adjacent the Rydberg cell.

EP 4 701 102 A1

20

| COUPLING LASER e.g., 480 nm | DRESSING LASER e.g., 1260 nm |
38 ⌐ | ⌐ 42

46 ⌐ CONTROLLER

52

RF REFLECTOR 3
62 ⌐

RF REFLECTOR 1
⌐ 56

22

RF REFLECTOR 2
58 ⌐

RYDBERG CELL

60

24    26

RF SIGNAL OUTPUT
⌐ 32

50

| SIGNAL LASER e.g., 776 nm | PROBE LASER e.g., 780 nm |
⌐ 40 | 36 ⌐

FIG. 1

$|r_2\rangle$

RF EMISSION
32

$\omega_{RF}$

$|r_1\rangle$

$\omega_{dressing}$
42

$\omega_{coupling}$
38

$|2\rangle$

$\omega_{signal}$
40

$|1\rangle$

$\omega_{probe}$
36

$|g\rangle$

FIG. 2

**FIG. 3**

FIG. 4

FIG. 5

FIG. 6

FIG. 7

FIG. 8

START 〜102

〜100

OPERATE A PLURALITY OF LASERS GENERATING A PLURALITY OF RESPECTIVE DIFFERENT FREQUENCY BEAMS INTO A RYDBERG CELL 〜104

SELECTIVELY EXCITE DIFFERENT ENERGY STATES FOR ATOMS WITHIN THE RYDBERG CELL AND GENERATE THE RF SIGNAL 〜106

END 〜108

FIG. 9

FIG. 10

FIG.11

EP 4 701 102 A1

START
202

200

GENERATE A PLURALITY OF RF SIGNALS USING A PLURALITY OF RESPECTIVE RYDBERG CELLS
204

COMBINE THE RESPECTIVE RF SIGNALS INTO THE OUTPUT RF SIGNAL USING A COMBINER DOWNSTREAM FROM THE PLURALITY OF RYDBERG CELLS
206

END
208

FIG. 12

Europäisches
Patentamt

European
Patent Office

Office européen
des brevets

# EUROPEAN SEARCH REPORT

**Application Number**

EP 25 18 7720

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LATYPOV DAMIR: "Compact quantum VLF/ELF sources for submarine to air communication", 2022 6TH UNDERWATER COMMUNICATIONS AND NETWORKING CONFERENCE, UCOMMS 2022, 30 August 2022 (2022-08-30), pages 1-4, XP093344419, DOI: 10.1109/UComms56954.2022.9905692 ISBN: 978-1-6654-7461-0 | 1-3,6-10 | INV. H04B10/70 H04B10/90 |
| A | * the whole document * | 4,5 | |

-----

**TECHNICAL FIELDS SEARCHED (IPC)**

H04B

The present search report has been drawn up for all claims

| Place of search | Date of completion of the search | Examiner |
|---|---|---|
| Munich | 8 December 2025 | Rolan Cisneros, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 10340574 B

### Non-patent literature cited in the description

- **HAN et al.** Coherent Microwave-to-Optical Conversion via Six-Wave Mixing in Rydberg Atoms. *Physical Review Letters*, 2018, vol. 120 (9), 093201